(19) Europäisches Patentamt

European Patent Office

Office européen des brevets

(11) Veröffentlichungsnummer: **0 053 723**
**B1**

(12) **EUROPÄISCHE PATENTSCHRIFT**

(45) Veröffentlichungstag der Patentschrift:
04.09.85

(21) Anmeldenummer: 81109374.9

(22) Anmeldetag: 30.10.81

(51) Int. Cl.⁴: **G 01 J 3/18**, G 21 K 1/06

(54) Plangitter-Monochromator.

(30) Priorität: 05.12.80 DE 3045931

(43) Veröffentlichungstag der Anmeldung:
16.06.82 Patentblatt 82/24

(45) Bekanntmachung des Hinweises auf die Patenterteilung:
04.09.85 Patentblatt 85/36

(84) Benannte Vertragsstaaten:
DE FR GB SE

(56) Entgegenhaltungen:
THE REVIEW OF SCIENTIFIC INSTRUMENTS, Band 43,
Nr. 3, März 1972, Seiten 434-442 New York, U.S.A. H.
DIETRICH et al.: "A grazing incidence vacuum
ultraviolet monochromator with fixed exit slit"
NUCLEAR INSTRUMENTS AND METHODS, Band 125,
Nr. 2, April 1975, Seiten 225-230 Amsterdam, NL. J.A.
HOWELL et al.: "Ellipsoidal and bent cylindrical
condensing mirrors for synchrotron radiation"
THE REVIEW OF SCIENTIFIC INSTRUMENTS, Band 47,
Nr. 7, Juli 1976, Seiten 838-839 New York, U.S.A. N.G.
WEBB et al.: "Remotely controlled mirror of variable
geometry for small-angle x-ray diffraction with
synchrotron radiation"
Journal of Opt. Soc. of America, 52, 768 (1962) (Murty)
Journal of Physics E, 7, 137 (1974) (West et al.)

(73) Patentinhaber: **Berliner
Elektronenspeicherring-Gesellschaft für
Synchrotronstrahlung mbH, Takusstrasse 3,
D-1000 Berlin 33 (DE)**

(72) Erfinder: **Petersen, Helmuth, Dr., Scharfenberger
Strasse 36, D-1000 Berlin 27 (DE)**

(74) Vertreter: **von Bezold, Dieter, Dr. et al, Patentanwälte Dr.
D. von Bezold, Dipl.-Ing. P. Schütz, Dipl.-Ing. W. Heusler
Maria-Theresia-Strasse 22 Postfach 86 02 60,
D-8000 München 86 (DE)**

## Beschreibung

Die vorliegende Erfindung betrifft einen Plangitter-Monochromator, mit einem ebenen Beugungsgitter, einer Vorrichtung, die ein Bündel einer spektral zu zerlegenden Wellenstrahlung unter variierenden Einfallswinkeln auf das Beugungsgitter wirft, einem Austrittsspalt, einem Hohlspiegel zum Fokussieren der vom Beugungsgitter zerlegten Strahlung auf den Austrittsspalt und einem mit der oben genannten Vorrichtung und dem Beugungsgitter gekoppelten Verstellmechanismus, durch den die Richtung, aus der das Licht auf das Beugungsgitter trifft, und das Beugungsgitter so bewegt werden, dass sich die Wellenlänge der auf den Austrittsspalt fokussierten Strahlung kontinuierlich ändert.

Der vorliegende Plangitter-Monochromator eignet sich besonders für die spektrale Zerlegung im fernen Vakuum-Ultraviolett (VUV) und im Gebiet der weichen Röntgenstrahlung, also im Wellenlängenbereich von etwa 1 bis 15 Nanometer. Er lässt sich jedoch auch für die spektrale Zerlegung von Strahlung in einem anderen Wellenlängenbereich oder von anderer Wellenstrahlung als elektromagnetischer Strahlung verwenden.

Plangitter-Monochromatoren wurden bisher im wesentlichen in zwei optischen Konfigurationen betrieben:

a) Für den sichtbaren und ultravioletten Spektralbereich mit jeweils einem sphärischen Spiegel zwischen Eintrittsspalt bzw. Austrittsspalt und Gitter zur Parallelisierung und Fokussierung der Strahlung: Czerny-Turner Monochromator (Z. Phys. 61, 792 (1930)), und

b) Für den Vakuum-Ultraviolett-Spektralbereich bei weit entfernter Quelle (grössenordnungsmässig 40 m) mit einem Parabolspiegel zwischen Gitter und Austrittsspalt zur Fokussierung der Strahlung (Journ. of Opt. Soc. of America 58, 1415 (1968)).

Aus Rev. Sci. Instr. 43 (1972) 434–442 ist ferner bekannt, zwischen der Quelle für die zu zerlegende Strahlung und dem ebenen Beugungsgitter einen Vorspiegel anzuordnen. Der Vorspiegel wird zusammen mit dem Beugungsgitter durch eine Vorrichtung so verstellt, dass das Gitter bei konstanter Eintrittsrichtung der zu zerlegenden Strahlung und konstanter Austrittsrichtung der zerlegten Strahlung vom Gitter zum Austrittsspalt im gesamten Wellenlängenbereich ständig im Blaze Maximum betrieben wird.

Nachteilig an den bekannten Plangitter-Monochromatoren mit Parabolspiegel als fokussierendes Element ist, dass der Bildpunkt wellenlängenabhängig in der Meridionalebene (Dispersionsebene) wandert. Daher muss entweder die Position des Austrittsspaltes wellenlängenabhängig geändert werden oder es muss eine Verschlechterung der Auflösung und Akzeptanz in Kauf genommen werden.

Ferner ist ein weiterer Auflösungsfehler nicht zu vermeiden, der darauf beruht, dass in der Praxis die Quellenentfernung meist ungleich der für den Parabolspiegel richtigen Entfernung «unendlich» ist.

Aus Rev. Sci. Instrum., 47 (1976) 836–839 ist die Verwendung eines Ellipsoidspiegels als Kondensorelement für Synchrotronstrahlung bekannt. Aus Nucl. Instr. Meth. 125 (1975) 225–230 ist eine Untersuchung der Eignung von Ellipsoidspiegeln für derartige Zwecke bekannt. Die Untersuchung kommt für den Fall ausgedehnter Quellen zum Schluss, dass ein Spiegel mit gebogener Zylindergeometrie einem Ellipsoidspiegel vorzuziehen sei.

Aufgabe der vorliegenden Erfindung ist einen Plangitter-Monochromator zu schaffen, der mit geringem mechanischem Aufwand und einer möglichst geringen Anzahl von optischen Elementen eine exakte, von Abbildungsfehlern praktisch freie Abbildung gewährleistet.

Diese Aufgabe wird bei einem Plangitter-Monochromator der gattungsgemässen Art durch die kennzeichnenden Merkmale des Anspruchs 1 gelöst.

Weiterbildungen der Erfindung sind Gegenstand von abhängigen Ansprüchen.

Der Plangitter-Monochromator gemäss der Erfindung hat gegenüber dem Stand der Technik den Vorteil, dass eine virtuelle Strahlungsquelle, die einen konstanten, endlichen Abstand von einer ortsfesten Drehachse des ebenen Beugungsgitters hat, erzeugt und kontinuierlich über den gesamten zu überdeckenden Spektralbereich durch den Ellipsoidspiegel in einer Dispersionsebene exakt auf den Austrittsspalt abgebildet wird. Der vorliegende Monochromator erlaubt damit eine erhebliche Steigerung der Leistungsfähigkeit von Plangitter-Monochromatoren, insbesondere im Vakuumultraviolett und im weichen Röntgenbereich: Gegenüber dem bekannten Typ (b) kann die erreichbare Auflösung erhöht werden und anders als beim bekannten Typ (a) werden ohne zusätzliche optische Elemente kleinere Quellabstände und damit grössere Akzeptanzen und Photonenflüsse realisierbar. Er kommt bei beweglicher Quelle (Eintrittsspalt) oder beweglichem Austrittsspalt mit nur zwei optischen Elementen aus und benötigt zusätzlich lediglich einen um eine feste Achse drehbaren Vorspiegel, wenn sowohl die Quelle als auch der Austrittsspalt stationär sein sollen.

Im folgenden werden Ausführungsbeispiele der Erfindung unter Bezugnahme auf die Zeichnung näher erläutert.

Es zeigen:

Fig. 1 eine schematische Darstellung der wesentlichen optischen Elemente eines Plangitter-Monochromators, der für das ferne Vakuum-Ultraviolett und das weiche Röntgengebiet ausgelegt ist;

Fig. 2 eine Darstellung des Strahlenganges des Monochromators gemäss Fig. 1;

Fig. 3 eine Darstellung des reellen und virtuellen Strahlengangs im Bereich des Beugungsgitters;

Fig. 4 graphische Darstellung des Gitterwirkungsgrades GE als Funktion der Wellenlänge λ und des Einfallswinkels am Gitter $\alpha$. Angegeben ist die Kurve für maximalen Wirkungsgrad und 50% des maximalen Wirkungsgrades bei kleineren und grösseren Winkeln $\alpha$ nach gemessenen Daten (Rev. Sci. Instr. 51, 814 (1980), Nucl. Instr. Meth. 152, 117 (1978), Nucl. Instr. Meth. 152, 127 (1978)). Der Verlauf der $(\lambda, \alpha)$-Kurve für den Plangitter-Monochromator gemäss Fig. 1 und 2 mit Gitterstrichdichte 1200 l/mm und $c = 2,25$ ist mit SX-700 Fixfocus 2,25 bezeichnet,

Fig. 5 eine Ausführungsform des vorliegenden Plangitter-Monochromators mit beweglichem Eintrittsspalt und stationärem Austrittsspalt, und

Fig. 6 eine nicht unter den unmittelbaren Gegenstand des Patentanspruchs 1 fallende Ausführungsform des Plangitter-Monochromators mit stationärem Eintrittsspalt und beweglichem Austrittsspalt.

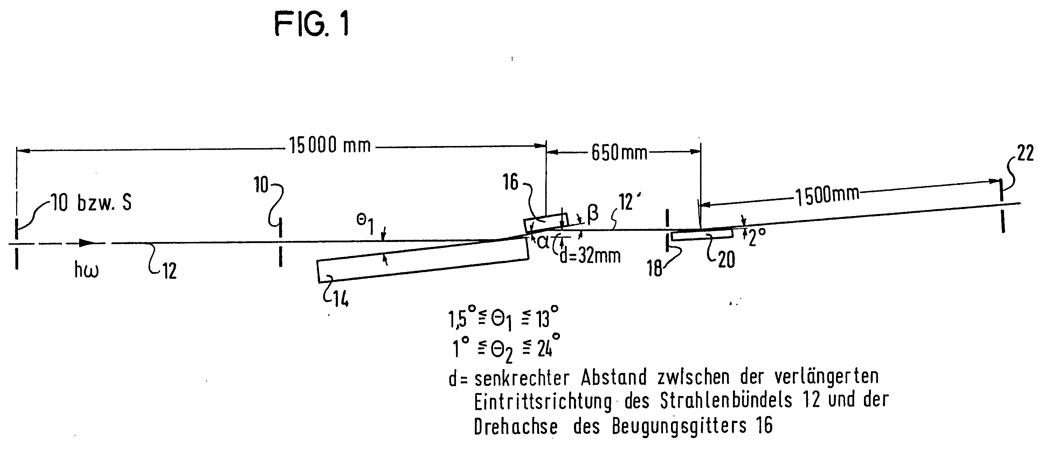

Der in Fig. 1 dargestellte Plangitter-Monochromator enthält eine Eintrittsapertur 10, die die Quelle eines Bündels 12 einer spektral zu zerlegenden elektromagnetischen Strahlung definiert. Im Strahlengang des Bündels 12 hinter der Eintrittsblende 10 befindet sich ein Vorspiegel 14 und anschliessend ein Beugungsgitter 16, z.B. ein Strichgitter mit 1200/Linien/mm. Ein Bündel 12' erster Ordnung der vom Gitter zerlegten Strahlung fällt durch eine Zwischenblende 18, die die nullte Ordnung sperrt, auf einen Ellipsoidspiegel 20, der dieses Strahlungsbündel auf einen Austrittsspalt 22 fokussiert.

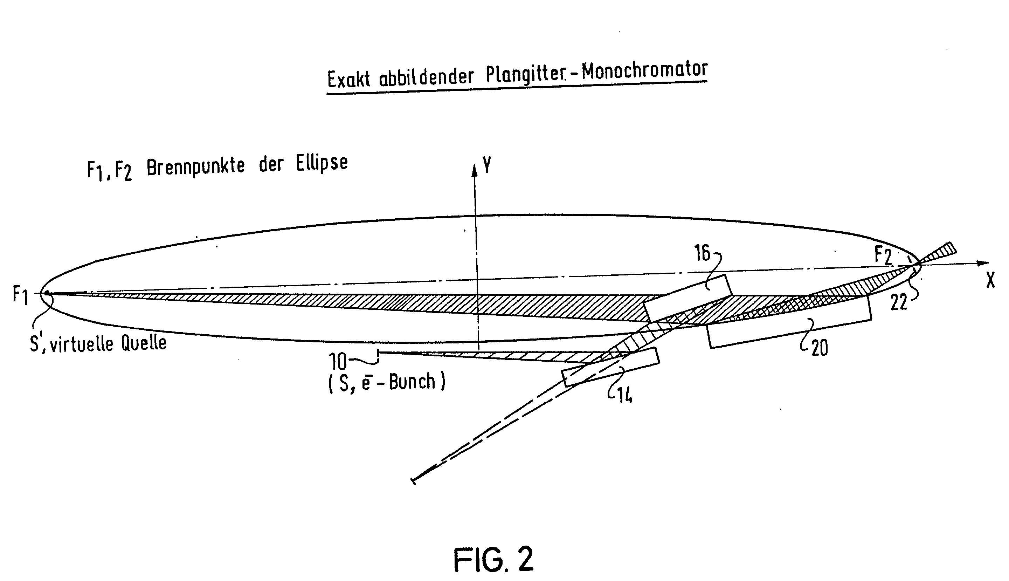

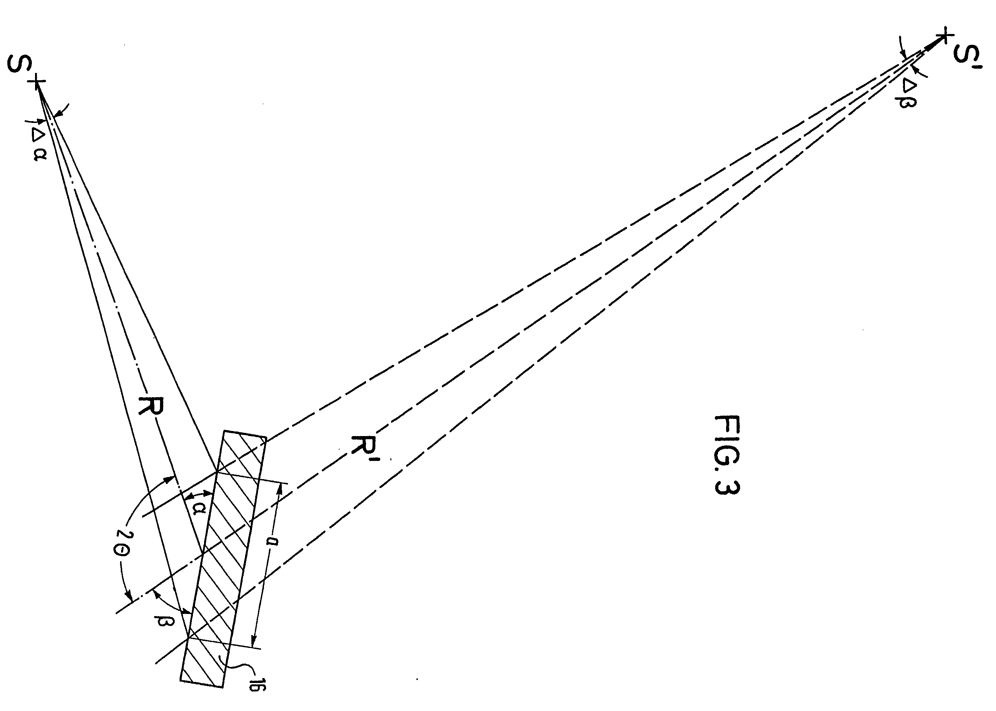

Bei dem vorliegenden Plangitter-Monochromator wird der Vorspiegel und das Gitter durch eine nicht dargestellte Verstellvorrichtung, die nicht Gegenstand der vorliegenden Erfindung ist und so ausgebildet sein kann, wie es in DE-A-3 102 684 beschrieben ist, so verstellt, dass die virtuelle Strahlungsquelle S (Fig. 2 und 3), von der das zerlegte Strahlungsbündel ausgeht, also das Bündel erster Ordnung der auf den Austrittsspalt 22 fokussierten Wellenlänge, raumfest ist, also eine wellenlängenunabhängige Lage hat.

Wegen

$$R' = R \frac{\sin^2 \beta}{\sin^2 \alpha}$$

wird dies erreicht durch die Wahl eines konstanten Verhältnisses

$$\frac{\sin \beta}{\sin \alpha} = \text{const} = c \qquad (1)$$

Dies bedeutet, dass der Abstand $R'$ der virtuellen Strahlungsquelle S' vom ebenen Beugungsgitter 16 einen konstanten wellenlängenunabhängigen Wert hat.

Der Verstellmechanismus ist vorteilhafterweise so ausgebildet, dass er das Beugungsgitter 16 um eine senkrecht zum Strahlengang des Strahlungsbündels 12 verlaufende und in der Mitte der Gitterebene liegende Achse (senkrecht zur Zeichenebene in Fig. 1) so dreht und den Vorspiegel 14 um eine zweite Achse, die parallel zur Gitterachse verläuft, so schwenkt, dass die Eintrittsrichtung sowie die Austrittsrichtung der Strahlung fest bleiben und die Bedingung gemäss Gleichung (1) erfüllt ist. Der Vorspiegel 14 ist in Richtung der einfallenden Strahlung so lang, dass der erforderliche Reflexionswinkelbereich mit einer Schwenkung des Vorspiegels um eine stationäre Achse überstrichen werden kann, ohne dass eine zusätzliche Translation des Vorspiegels erforderlich ist (siehe DE-A-3 102 684).

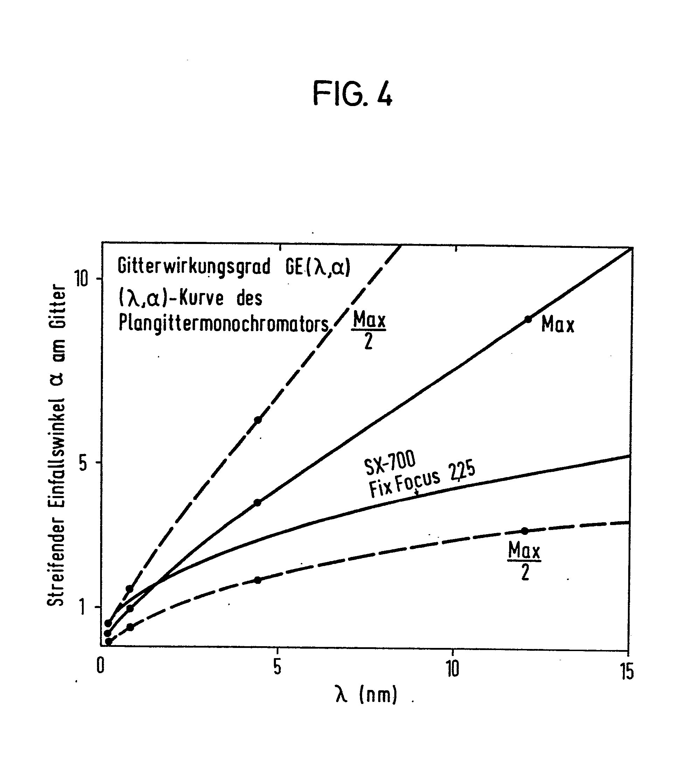

Es kann gezeigt werden, dass eine solche Betriebsweise, bei der, wie beschrieben, aus optischen Gründen das Verhältnis des Sinus des Ausfallswinkels $\beta$ zum Sinus des Einfallswinkels $\alpha$ konstant gehalten wird, auch vom Gitterwirkungsgrad her sinnvoll ist. Optimiert man beispielsweise den Gitterwirkungsgrad GE $(\lambda, \alpha)$ bei einem Gitter von 1200 l/mm für den kurzwelligen Teil des von dem vorliegenden Ausführungsbeispiel überdeckten Spektralbereiches von etwa 1 bis 44 Nanometer, so erhält man für die Konstante c den Wert 2,25 und es lässt sich dann in diesem ganzen Wellenlängenbereich ein Wirkungsgrad erreichen, der immer über die Hälfte des theoretisch maximalen Gitterwirkungsgrades liegt (siehe Fig. 4).

Für die Wellenlänge $\lambda$ und den Gesamtablenkwinkel $2\theta$ am Beugungsgitter gelten die folgenden Gleichungen:

$$\lambda = d (\cos \alpha - \cos [\arcsin (c \cdot \sin \alpha)]) \qquad (2)$$

$$2\theta = 180° - (\alpha + \arcsin (c \cdot \sin \alpha)) \qquad (3)$$

Zur Änderung des Gesamtablenkwinkels $2\theta$ (bei fester Austrittsrichtung des Strahlungsbündels 12') in Abhängigkeit von der Wellenlänge wird die Richtung des auf das Gitter fallenden Strahlungsbündels, wie erwähnt, kontinuierlich geändert.

Die virtuelle Strahlungsquelle S' liegt im einen Brennpunkt F1 und der Austrittsspalt 22 liegt im anderen Brennpunkt F2 des Ellipsoids, von dem der Ellipsoidspiegel 20 einen Teil bildet (Fig. 2). Die Abbildung durch den Ellipsoid-Spiegel 20 ist daher für eine näherungsweise punktförmige Strahlungsquelle für den ganzen vom Monochromator überdeckten Spektralbereich in der Dispersionsebene fehlerfrei. Die erreichbare Auflösung wird lediglich durch das Winkelintervall begrenzt, unter dem die reelle Strahlungsquelle S von einem beliebigen Punkt der Gitteroberfläche her erscheint, d.h. also durch die Dimensionen der Strahlungsquelle und den Abstand des Gitters von der Strahlungsquelle.

Die mit dem Einsatz des ebenen Gitters in nichtparallelem Licht (J. Opt. Soc. Am. 52, 768 (1962)) und des Ellipsoidspiegels bei nicht-punktförmiger Quelle (J. Opt. Soc. Am. 66, 938 (1976)) verbundenen Bildfehler sind bei den Dimensionen von Quellen weicher Röntgenstrahlung (Elektronenbunche in Elektronenspeicherringen) und bei dem vorgesehenen Öffnungsverhältnis der Optik von untergeordneter Bedeutung der wegen der unterschiedlichen Quellenentfernungen in Sagittal- und Meridionalebene auftretende Astigmatismus wirkt nicht auflösungsmindernd.

Ein praktisches Ausführungsbeispiel des in Fig. 1 schematisch dargestellten Monochromators wies die folgenden Daten auf:

| | |
|---|---|
| Gitterstrichdichte | 1200 Linien/mm |
| Gitterbreite (quer zur Dispersionsebene) | 30 mm |
| Brennpunktsentfernung Ellipsoidspiegel – Austrittsspalt | 1500 mm {1000 mm} |
| Streifender Einfallswinkel am Ellipsoidspiegel | 2° |
| Entfernung Gitterachse – reale Quelle S (in Strahlrichtung) | 15 000 mm |
| Entfernung Gitterachse – Mitte Ellipsoidspiegel | 650 mm {500 mm} |

$$\frac{\sin \beta}{\sin \alpha} = const = 2{,}25$$

Damit:

| | |
|---|---|
| Brennpunktentfernung Ellipsoidspiegel – virtuelle Quelle S' | 76 587,5 mm |

Normalform der Ellipse

$$\frac{x^2}{(39043{,}75 \text{ mm})^2} + \frac{y^2}{(374{,}062 \text{ mm})^2}$$

$$\left\{ \frac{x^2}{(38718{,}75 \text{ mm})^2} + \frac{y^2}{(305{,}1212 \text{ mm})^2} = 1 \right\}$$

Die Angaben in geschweiften Klammern gelten für eine abgewandelte Ausführungsform.

Variationsbereich des streifenden Einfallswinkels am Vorspiegel 14:

$$1{,}5° \leqslant \theta_1 \leqslant 13°,$$

waagerechte Strahlaustrittsrichtung vom Gitter, damit: Variationsbereich des Gesamtablenkwinkels über dem Gitter

$$154° \leqslant 2\theta \leqslant 177°$$

Mit diesen Daten überdeckter Spektralbereich

$$\sim 0{,}8 \text{ nm} \leqq \lambda \leqq 33{,}8 \text{ nm}$$

im beschriebenen Optik-Modus mit fester virtueller Quelle.

In Umkehrung von Gleichung (2) ist in einem Anhang zur Beschreibung die Abhängigkeit des Einfallswinkels $\alpha$ von der Wellenlänge $\lambda$ der auf den Austrittsspalt 22 fokussierten zerlegten Strahlung explizit angegeben.

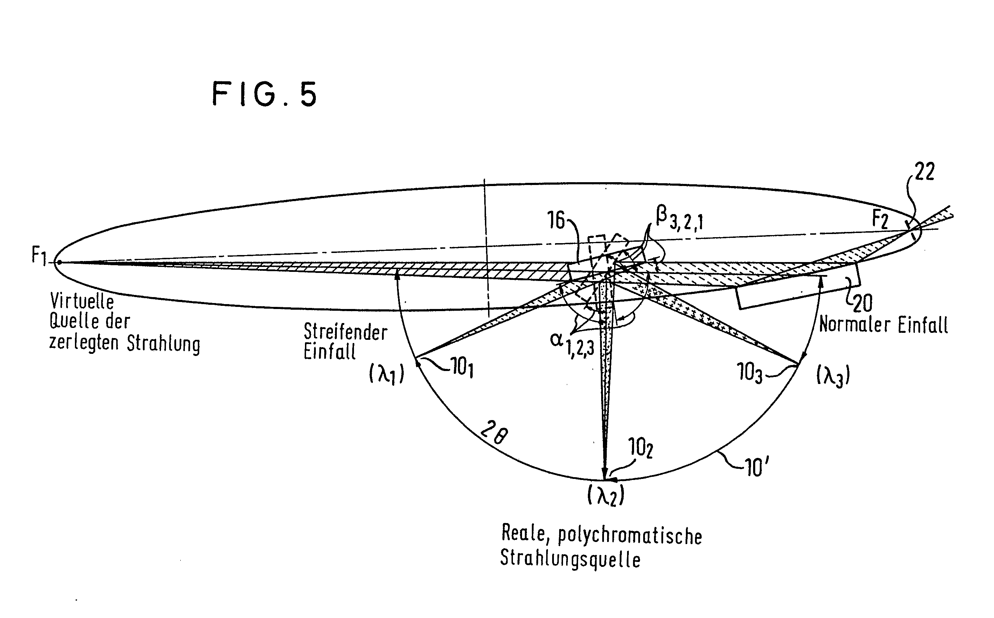

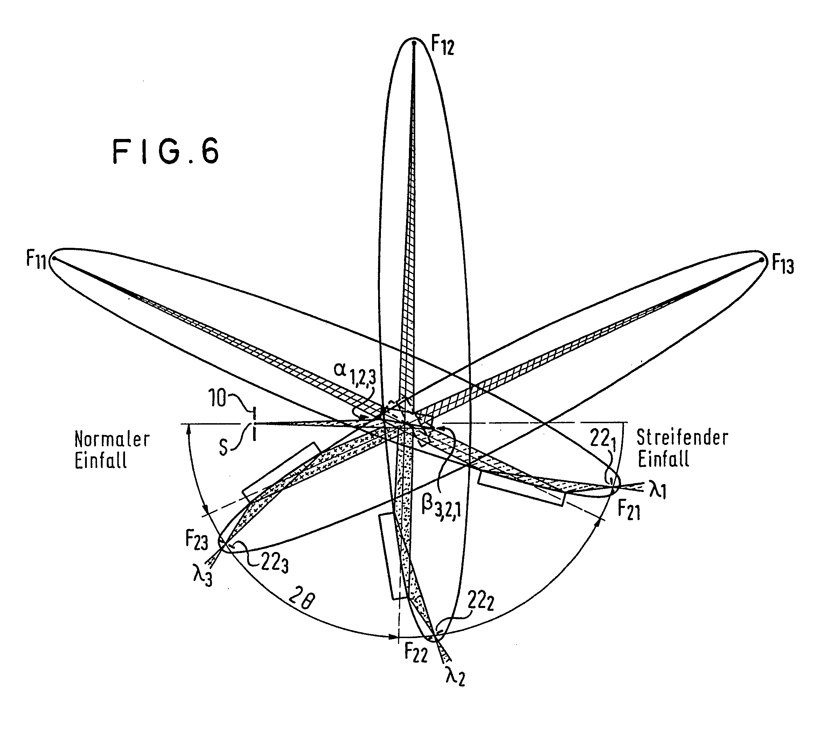

Anhand der Fig. 1 bis 4 wurde ein bevorzugtes Ausführungsbeispiel der Erfindung beschrieben, bei dem sowohl der Eintrittsspalt (d.h. die effektive Strahlungsquelle) als auch der Austrittsspalt stationär sind und mit streifendem Einfall der Strahlung auf das Beugungsgitter, also mit Einfallswinkeln unter etwa 15° gearbeitet wird. Wenn man zulässt, dass bei der Wellenlängenselektion entweder der Eintrittsspalt oder der Austrittsspalt verstellt werden müssen, ergeben sich Ausführungsformen, wie sie in den Fig. 5 bzw. 6 analog zu Fig. 2 dargestellt sind. Diese Ausführungsformen benötigen keinen Vorspiegel, so dass sie mit nur zwei optischen Elementen, dem ebenen Beugungsgitter 16 und dem Ellipsoidspiegel 20 auskommen.

Bei dem Plangitter-Monochromator gemäss Fig. 5 ist der Austrittsspalt 22 stationär, während der Eintrittsspalt oder die reale Strahlungsquelle bei der Wellenlängenselektion durch die Verstellvorrichtung in Abhängigkeit von der Drehung des Gitters 16 längs einer halbkreisförmigen Bahn 10' so um die Drehachse des Gitters geschwenkt wird, dass die Bedingung (1) erfüllt bleibt. Der Einfallswinkel kann dabei von sehr kleinen Werten (entsprechend einem streifenden Einfall) bis in die Nähe von 90° geändert werden. In Fig. 5 sind die Stellungen des Gitters 16, die Einfalls- und Ausfallswinkel $\alpha_1$ bis $\alpha_3$ bzw. $\beta_1$ bis $\beta_3$ sowie die Örter $10_1$ bis $10_3$ des Eintrittsspaltes für drei verschiedene selektierte Wellenlängen $\lambda_1$ bis $\lambda_3$ dargestellt.

Fig. 6 zeigt bei einer nicht unter den unmittelbaren Gegenstand des Patentanspruches 1 fallenden Ausführungsart des Plangitter-Monochromators in entsprechender Weise die Strahlengänge, wobei die Quelle für die polychromatische Strahlung bzw. der Eintrittsspalt 10 stationär ist und der Austrittsspalt bei der Wellenlängenselektion auf einer kreisbogenförmigen Bahn 22' um die Drehachse des Beugungsgitters geschwenkt wird. Es sind wieder die drei Stellungen des Beugungsgitters 16, die Einfalls- und Ausfallswinkel $\alpha_1$ bis $\alpha_3$ bzw. $\beta_1$ bis $\beta_3$, die Örter $22_1$ bis $22_3$ des Austrittsspalts, sowie die Örter $F_{12}$ bis $F_{13}$ der virtuellen Strahlungsquelle (entsprechend dem einen Ellipsenbrennpunkt) für drei selektierte Wellenlängen $\lambda_1$ bis $\lambda_3$ dargestellt.

Die Begriffe «Eintrittsspalt» und «Austrittsspalt» sind im Sinne von Eintrittsapertur bzw. Austrittsapertur zu verstehen, da eine Spaltblende entfallen kann, wenn die Strahlungsquelle bzw. ein Strahlungsdetektor für die selektierte, zerlegte Strahlung im wesentlichen linien- oder punktförmig sind.

Anhang

Abhängigkeit des Einfallswinkels $\alpha$ von der Wellenlänge $\lambda$ der zerlegten Strahlung

Im folgenden soll der (streifende) Einfallswinkel $\alpha$ am Gitter in Abhängigkeit von der Wellenlänge $\lambda$ dargestellt werden. Da in der Praxis stets Wellenlänge bzw. Photonenenergie vorgewählt wird, ist diese Form der Darstellung wichtig.

Der überdeckte Winkelbereich ist mit c = 2,25:

$$0{,}9° < \alpha < 8°$$

entsprechend 0,016 rad $< \alpha <$ 0,14 rad

Eine sinnvolle Näherung ergibt sich damit bei Abbruch der Potenzreihenentwicklung der trigonomerischen Funktionen nach der 6. Potenz in $\alpha$ bzw. in f ($\alpha$):

$$\sin(\alpha) \cong \alpha - \frac{\alpha^3}{3!} + \frac{\alpha^5}{5!}; \ w \overset{\text{Def.}}{=} c\left(\alpha - \frac{\alpha^3}{3!} + \frac{\alpha^5}{5!}\right) \quad (A1)$$

$$\text{arcsin}(w) \cong w + \frac{1}{6}w^3 + \frac{3}{40}w^5 \quad (A2)$$

$$\cos(u) \cong 1 - \frac{u^2}{2!} + \frac{u^4}{4!} - \frac{u^6}{6!} \qquad (A3)$$

In dieser Näherung wird:

$$\cos(\arcsin(w)) \cong 1 - \frac{w^2}{2} - \frac{w^4}{8} - \frac{w^6}{16} \qquad (A4)$$

und als Funktion von $\alpha$:

$$\cos(\arcsin(c \cdot \sin\alpha)) \cong 1 - \alpha^2 \frac{c^2}{2} -$$

$$\alpha^4\left(\frac{c^4}{8} - \frac{c^2}{6}\right) - \alpha^6\left(\frac{c^2}{45} - \frac{c^4}{12} + \frac{c^6}{16}\right) \qquad (A5)$$

Damit ergibt sich eine Gleichung 3. Grades in $\alpha^2$. Einsetzen der Näherung

$$\cos\alpha \cong 1 - \frac{\alpha^2}{2!} + \frac{\alpha^4}{4!} - \frac{\alpha^6}{6!} \qquad (A6)$$

ergibt mit Substitution

$$\alpha^2 \to z$$

die gesuchte Potenz-Reihen Näherung für $\lambda$

$$\lambda \cong d\left[z\left(\frac{c^2}{2} - \frac{1}{2}\right) + z^2\left(\frac{c^4}{8} - \frac{c^2}{6} + \frac{1}{24}\right)\right.$$

$$\left. + z^3\left(\frac{c^4}{16} - \frac{c^4}{12} + \frac{c^2}{45} - \frac{1}{720}\right)\right] \qquad (A7)$$

Durch Umformung ergibt sich nun $z = f(\lambda)$ und damit $\alpha = f(\lambda)$: Die Gleichung (A7) hat die Form

$$Az^3 + Bz^2 + Cz + D = 0 \qquad (A8)$$

mit

$$A = \frac{c^6}{16} - \frac{c^4}{12} + \frac{c^2}{45} - \frac{1}{720}$$

$$B = \frac{c^4}{8} - \frac{c^2}{6} + \frac{1}{24}$$

$$C = \frac{c^2}{2} - \frac{1}{2}$$

$$D = \frac{\lambda}{d}$$

Mit Hilfe der Cardanischen Formel* lassen sich Gleichungen der Form

$$x^3 + px + q = 0 \qquad (A9)$$

geschlossen lösen. Mit Hilfe der Substitution

$$z = x - \frac{B}{3A}$$

wird Gleichung (A8) in diese Form übergeführt:

$$(A8) \leftrightarrow x^3 + x\underbrace{\left(\frac{C}{A} - \frac{B^2}{3A^2}\right)}_{p} + \underbrace{\left(\frac{2B^3}{27A^3} - \frac{CB}{3A^2} - \frac{\lambda}{Ad}\right)}_{q} = 0 \qquad (A10)$$

Gleichung (A9, 10) hat die Lösung

$$x = \sqrt[3]{-\frac{q}{2} + \sqrt{\left(\frac{q}{2}\right)^2 + \left(\frac{p}{3}\right)^3}}$$

$$+ \sqrt[3]{-\frac{q}{2} - \sqrt{\left(\frac{q}{2}\right)^2 + \left(\frac{p}{3}\right)^3}} \qquad (A11)$$

und also

$$\cdot\alpha = \sqrt{z} = \sqrt{x - \frac{B}{3A}} \ (\text{rad}) = f(\lambda) \qquad (A12)$$

Damit ist $\alpha$ explizit als Funktion von $\lambda$ gegeben.

\* Bemerkungen zur Benutzung der Cardanischen Formel (A11): Für eine der Wurzeln wird der reelle Wert gewählt. Der zu wählende Wert der anderen Kubikwurzel ergibt sich aus der Bedingung, dass das Produkt beider Wurzeln $-p/3$ beträgt.

**Patentansprüche**

1. Plangitter-Monochromator, mit einem ebenen Beugungsgitter (16), einer Vorrichung, die ein Bündel einer spektral zu zerlegenden Wellenstrahlung unter variierenden Einfallswinkeln auf das Beugungsgitter wirft, einem Austrittsspalt (22), einem Hohlspiegel (20) zum Fokussieren der vom Beugungsgitter (16) zerlegten Strahlung auf den Austrittsspalt (22) und einem mit der oben genannten Vorrichtung und dem Beugungsgitter (16) gekoppelten Verstellmechanismus, durch den die Richtung, aus der das Licht auf das Beugungsgitter (16) trifft, und das Beugungsgitter (16) so bewegt werden, dass sich die Wellenlänge der auf den Austrittsspalt (22) fokussierten Strahlung kontinuierlich ändert, dadurch gekennzeichnet, dass der Verstellmechanismus derart ausgebildet ist, dass er die Richtung der einfallenden Strahlung und das Beugungsgitter (16) bei der Änderung der Wellenlänge der auf den ortsfesten Austrittsspalt (22) fokussierten Strahlung so bewegt, dass der Quotient des Sinus des Ausfallswinkels ($\beta$) zum Sinus des Einfallswinkels ($\alpha$) der Strahlung am Beugungsgitter (16) konstant bleibt und dadurch die von einer näherungsweisen punktförmigen, reellen Quelle (S) ausgehende Strahlung von einer raumfesten virtuellen Quelle (S') auszugehen scheint, und dass der Hohlspiegel als Ellipsoidspiegel (20) so ausgebildet und angeordnet ist, dass in seinem einen Brennpunkt ($F_1$) die virtuelle Quelle (S') der zerlegten monochromatischen Strahlung und im anderen Brennpunkt ($F_2$) der ortsfeste Austrittsspalt (22) liegen.

2. Plangitter-Monochromator nach Anspruch 1, dadurch gekennzeichnet, dass das Beugungsgitter mit streifendem Einfall der zu zerlegenden Strahlung arbeitet.

9 0 053 723 10

3. Plangitter-Monochromator nach Anspruch 1 oder 2 mit stationärem Ein- und Austrittsspalt, gekennzeichnet durch einen zwischen Eintrittsspalt (10) und dem Beugungsgitter (16) angeordneten, verstellbaren Vorspiegel (14), der die vom Eintrittsspalt (10) kommende, zu zerlegende Strahlung derart auf das Beugungsgitter (16) fallen lässt, dass die Bedienung

$$\frac{\sin \beta}{\sin \alpha} = \text{const.}$$

bei Drehung des Beugungsgitters erfüllt bleibt.

4. Plangitter-Monochromator nach Anspruch 1, 2 oder 3 mit einem Gitter von 1200 l/mm optimiert für eine zu zerlegende Strahlung im Wellenlängenbereich um 5 Nanometer, dadurch gekennzeichnet, dass

$$\frac{\sin \beta}{\sin \alpha} = 2{,}25$$

ist.

5. Plangitter-Monochromator nach einem der Ansprüche 1 bis 4, dadurch gekennzeichnet, dass eine die nullte Ordnung sperrende Zwischenblende (18) im Strahlengang der zerlegten Strahlung vor dem Ellipsoidspiegel (20) angeordnet ist.

**Claims**

1. A plane-grating monochromator comprising a plane diffraction grating (16), a means for projecting a beam of a wave radiation which is to be subjected to spectral separation onto the diffraction grating at varying angles of incidence, an exit slit (22), a concave mirror (20) for focussing the radiation which is separated by the diffraction grating (16) onto the exit slit (22) and an adjusting mechanism which is coupled to said means and to the diffraction grating (16) and which moves the direction from which the light impinges on the diffraction grating (16) and the diffraction grating (16) in such a manner that the wavelength of the radiation which is focussed onto the exit slit (22) continuously alters, characterized in that the adjusting mechanism is of such a design that it moves the direction of the incident radiation and the diffraction grating (16), upon the change in the wavelength of the radiation which is focussed onto the stationary exit slit (22), in such a way that the quotient of the sine of the angle of emergence ($\beta$) to the sine of the angle of incidence ($\alpha$) of the radiation at the diffraction grating (16) remains constant, and thereby the radiation originating from an approximately punctiform real source (S) appears to originate from a virtual source (S′) which is fixed in space, and that the concave mirror is formed and arranged as an ellipsoidal mirror (20) in such a way that the virtual source (S′) of the separated monochromatic radiation lies at its one focal point ($F_1$) and the stationary exit slit (22) lies at the other focal point ($F_2$).

2. A plane-grating monochromator according to claim 1 characterized in that the diffraction grating operates with grazing incidence of the radiation which is to be analyzed.

3. A plane-grating monochromator according to claim 1 or claim 2 with stationary entrance and exit slits, characterized by an adjustable premirror (14) which is arranged between the entrance slit (10) and the diffraction grating (16) and which causes the radiation to be split up, coming from the entrance slit (10), to fall onto the diffraction grating (16) in such a way that the condition

$$\frac{\sin \beta}{\sin \alpha} = \text{const.}$$

remains met upon rotary movement of the diffraction grating.

4. A plane-grating monochromator according to claim 1, claim 2 or claim 3 with a grating of 1200 l/mm optimised for a radiation which is to be split up, in the wavelength range around 5 nanometres, characterized in that

$$\frac{\sin \beta}{\sin \alpha} = 2{,}25$$

5. A plane-grating monochromator according to one of claims 1 to 4 characterized in that an intermediate aperture (18) for blocking the zero-th order is disposed in the path of the split-up radiation in front of the ellipsoidal mirror (20).

**Revendications**

1. Monochromateur à réseau plan, comportant un réseau de diffraction plan (16), un dispositif qui envoie sur le réseau de diffraction sous des angles d'incidence variables un faisceau d'un rayonnement à décomposer spectralement, une fente de sortie (22), un miroir concave (20) pour focaliser sur la fente de sortie (22) le rayonnement décomposé par le réseau de diffraction (16) et un mécanisme de déplacement couplé avec le dispositif cité ci-dessus et le réseau de diffraction (16), qui permet de déplacer la direction d'où la lumière arrive sur le réseau de diffraction (16) et le réseau de diffraction (16) de telle sorte que la longueur d'onde du rayonnement focalisé sur la fente de sortie (22) varie de façon continue, caractérisé en ce que le mécanisme de déplacement est réalisé de telle sorte qu'il déplace la direction du rayonnement incident et le réseau de diffraction (16) lors du changement de longueur d'onde du rayonnement focalisé sur la fente de sortie fixe (22) de telle sorte que le quotient du sinus de l'angle de réflexion ($\beta$) par le sinus de l'angle d'incidence ($\alpha$) du rayonnement sur le réseau de diffraction (16) reste constant et que de ce fait le rayonnement partant d'une source réelle (S) approximativement ponctuelle semble partir d'une source virtuelle (S′) fixe dans l'espace, et le miroir concave est réalisé en tant que miroir ellipsoïdal (20) et disposé de telle sorte que la source virtuelle (S') du rayonnement monochromatique décomposé se trouve à l'un de ses foyers (F₁) et la fente de sortie (22) se trouve à l'autre foyer (F₂).

2. Monochromateur à résean plan selon la revendication 1, caractérisé en ce que le réseau de diffraction travaille avec une incidence rasante du rayonnement à décomposer.

3. Monochromateur à réseau plan selon la revendication 1 ou 2, comportant une fente d'entrée et de sortie stationnaire, caractérisé par un miroir antérieur (14) réglable, situé entre la fente d'entrée (10) et le réseau de diffraction (16), qui fait tomber le rayonnement à décomposer arrivant de la fente d'entrée (10) sur le réseau de diffraction (16) de telle sorte que la condition

$$\frac{\sin \beta}{\sin \alpha} = \text{const.}$$

reste remplie lorsque le réseau de diffraction tourne.

4. Monochromateur à réseau plan selon la revendication 1, 2 ou 3, comportant un réseau de 1200 lignes/mm optimisé pour un rayonnement à décomposer dans la plage des longueurs d'onde de 5 nanomètres, caractérisé en ce que

$$\frac{\sin \beta}{\sin \alpha} = 2{,}25$$

5. Monochromateur à réseau plan selon l'une des revendications 1 à 4, caractérisé en ce qu'un diaphragme intermédiaire (18) arrêtant l'ordre zéro est placé dans le trajet du rayonnement décomposé avant le miroir ellipsoïdal (20).

# FIG. 1

15000 mm · 650mm · 1500mm

10 bzw. S · 10 · 16 · 22

6 · 0 053 723

$1,5° \leqq \Theta_1 \leqq 13°$

$1° \leqq \Theta_2 \leqq 24°$

d = senkrechter Abstand zwischen der verlängerten
Eintrittsrichtung des Strahlenbündels 12 und der
Drehachse des Beugungsgitters 16

Exakt abbildender Plangitter-Monochromator

$F_1, F_2$ Brennpunkte der Ellipse

FIG. 2

FIG. 3

FIG. 4

# FIG. 5

**22**

**16**    $\beta_{3,2,1}$

**F2**

**F1**

Virtuelle
Quelle der
zerlegten Strahlung

Streifender
Einfall

$\alpha_{1,2,3}$

**20**
Normaler Einfall

$(\lambda_1)$   **10₁**

$10_3$   $(\lambda_3)$

$2\theta$

**10₂**

**10'**

$(\lambda_2)$

Reale, polychromatische
Strahlungsquelle

FIG.6